# EUROPÄISCHE PATENTANMELDUNG

(11) **EP 0 999 376 A2**
(43) Veröffentlichungstag der Anmeldung: **10.05.2000**
(21) Anmeldenummer: 99121443.8
(22) Anmeldetag: 28.10.1999
(51) Int. Cl.: F16D 65/092

(54) **Verfahren zur Herstellung eines Bremsbelagträgers**

(30) Priorität: 03.11.1998 DE 19850553
(71) Anmelder: Kirschdorf, Dieter, D-46282 Dorsten (DE)
(72) Erfinder: Kirschdorf, Dieter, D-46282 Dorsten (DE)
(74) Vertreter: Schulze Horn & Partner

(57) **Zusammenfassung**

Die Erfindung betrifft ein Verfahren zur Herstellung eines Bremsbelagträgers (1), wobei mit dessen einer, einem zu tragenden Bremsbelag abgewandter Flachseite (10) ein Dämmblech (2) zur Vermeidung oder Verminderung von Bremsgeräuschen verbunden wird.

Das erfindungsgemäße Verfahren ist dadurch gekennzeichnet,
- daß in die genannte Flachseite (10) des Bremsbelagträgers (1) mindestens eine kreis- oder kreisringförmige Eintiefung (12), die sich zumindest in ihrem unteren Teil schräg nach unten und außen erstreckt, eingebracht wird,
- daß an dem Dämmblech (2) mindestens ein vorragender hohlzylindrischer Kragen (22), dessen Kontur in das obere Ende der Eintiefung (12) paßt, angebracht oder angeformt wird,
- daß das Dämmblech (2) mit seinem Kragen (22) auf die Eintiefung (12) des Bremsbelagträgers (1) aufgelegt wird und
- daß das Dämmblech (2) durch einen Stauchvorgang mit dem Bremsbelagträger (1) verbunden wird, indem der Kragen (22) unter Aufweitung zumindest seines vorderen Bereiches (22'') in die Eintiefung (12) eingepreßt wird.

## Beschreibung

Die vorliegende Erfindung betrifft ein Verfahren zur Herstellung eines Bremsbelagträgers, wobei mit dessen einer, einen zu tragenden Bremsbelag abgewandter Flachseite ein Dämmblech zur Vermeidung oder Verminderung von Bremsgeräuschen verbunden wird.

Bremsbelagträger mit einem Dämmblech werden insbesondere für Scheibenbremsen in Kraftfahrzeugen verwendet, wobei angestrebt wird, möglichst wenig oder keine Geräusche durch Schwingungen des Bremsbelagträgers bei einem Bremsvorgang entstehen zu lassen. Hierzu ist das Dämmblech vorgesehen, das mit dem Bremsbelagträger, der eine im Verhältnis zum Dämmblech große Materialdicke aufweist, verbunden wird. Aus der Praxis sind zwei Verbindungsverfahren hierfür bekannt: Bei einem ersten Verfahren werden an dem Bremsbelagträger einstückige Nieterhebungen angeformt; das Dämmblech wird mit passenden Bohrungen versehen und auf den Bremsbelagträger aufgelegt. Die durch die Bohrungen im Dämmblech ragenden Nieterhebungen werden dann mittels eines Nietwerkzeuges umgeformt, wodurch das Dämmblech mit dem Bremsbelagträger vernietet wird. Ein zweites bekanntes Verfahren besteht in einem Verkleben von Bremsbelagträger und Dämmblech.

Bei dem ersten bekannten Verfahren wird als nachteilig angesehen, daß die Herstellung des Bremsbelagträger aufgrund der daran vorzusehenden Nieterhebungen relativ aufwendig ist. In der Praxis erfolgt die Herstellung entweder als Gußteil oder als Stanz- und Prägeteil. Ein Gußteil erfordert eine spanende Bearbeitung der Oberfläche, um die erforderliche Planheit und Maßgenauigkeit zu gewährleisten; für die Herstellung als Stanz- und Prägeteil fallen insbesondere hohe Formkosten an, weil die Formen einer hohen mechanischen Beanspruchung und einem starken Verschleiß unterliegen, was sich besonders bei Massenfertigung auf die Kosten negativ auswirkt. Auf diese Weise werden die Herstellungskosten des Bremsbelagträgers relativ hoch.

Bei dem zweiten bekannten Verfahren wird als nachteilig angesehen, daß die Klebeverbindung zwischen Bremsbelagträger und Dämmblech nicht immer den im Betrieb der zugehörigen Bremse auftretenden hohen Temperaturen gewachsen ist, wodurch es zu einer Lösung der Verbindung zwischen Bremsbelagträger und Dämmblech kommen kann. Die Bremsfunktion der Bremse bleibt dann zwar erhalten, jedoch geht die Schalldämmwirkung verloren.

Für die vorliegende Erfindung stellt sich deshalb die Aufgabe, ein Verfahren zur Herstellung eines Bremsbelagträgers der eingangs genannten Art zu schaffen, das die aufgeführten Nachteile vermeidet und mit dem ein Bremsbelagträger mit vergleichsweise geringem Herstellungsaufwand gefertigt werden kann und das eine sichere und dauerhafte Verbindung des Dämmbleches mit dem Bremsbelagträger gewährleistet.

Die Lösung der Aufgabe gelingt durch ein Verfahren der eingangs genannten Art, das dadurch gekennzeichnet ist,
- daß in die eine, dem zu tragenden Bremsbelag abgewandte Flachseite des Bremsbelagträgers mindestens eine kreis- oder kreisringförmige Eintiefung, die sich zumindest in ihrem unteren Teil schräg nach unten und außen erstreckt, eingebracht wird,
- daß an dem Dämmblech mindestens ein vorragender hohlzylindrischer Kragen, dessen Kontur in das obere Ende der Eintiefung paßt, angebracht oder angeformt wird,
- daß das Dämmblech mit seinem Kragen auf die Eintiefung des Bremsbelagträgers aufgelegt wird und
- daß das Dämmblech durch einen Stauchvorgang mit dem Bremsbelagträger verbunden wird, indem der Kragen unter Aufweitung zumindest seines vorderen Bereiches in die Eintiefung eingepreßt wird.

Vorteilhaft benötigt das erfindungsgemäße Verfahren nur noch einen flachen, plattenförmigen Bremsbelagträger als Ausgangsmaterial, in den mittels geeigneter Bearbeitungsverfahren die Eintiefung in ihrer oben beschriebenen Form eingebracht wird. Da der Bremsbelagträger immer eine relativ große Materialstärke hat, ist das Einbringen der Eintiefung kein Problem und führt auch nicht zu einer unzulässigen Schwächung des Bremsbelagträgers oder zu unerwünschten Eintiefungen in seiner Rückseite, wo der Bremsbelag anzubringen ist.

Das Dämmblech erfordert für das erfindungsgemäße Verfahren zwar einen geringfügig größeren Bearbeitungsaufwand, weil anstelle einer Bohrung nun ein vorragender hohlzylindrischer Kragen angebracht oder angeformt wird, jedoch ist der hierfür erforderliche Bearbeitungs-Mehraufwand geringer als die Einsparung bei der Herstellung des Bremsbelagträgers. Schließlich bietet das erfindungsgemäße Verfahren eine sehr zuverlässige und dauerhafte Verbindung zwischen Bremsbelagträger und Dämmblech, die allen im betrieblichen Einsatz auftretenden Belastungen sicher gewachsen ist. Da die für die Herstellung des Bremsbelagträgers anzuwendenden Verfahrensschritte relativ einfach sind, kann die Herstellung auch problemlos automatisiert werden, so daß große Stückzahlen wirtschaftlich hergestellt werden können.

Eine Weiterbildung des Verfahrens sieht vor, daß die Eintiefung im Bremsbelagträger mit einem oberen, senkrecht zur Flachseite nach unten verlaufenden Bereich ausgeführt wird. Hierdurch wird insbesondere erreicht, daß vor dem Stauchvorgang das Dämmblech schon mit dem vorderen Bereich seines Kragens in den oberen Bereich oder Anfangsabschnitt der Eintiefung lose eingesteckt werden kann. Dies gewährleistet ohne weitere Hilfsmittel eine exakte Positionierung von Bremsbelagträger und Dämmblech relativ zueinander, bevor der abschließende Stauchvorgang durchgeführt wird.

Zur Herstellung der Eintiefung schlägt eine erste Ausgestaltung des Verfahrens vor, daß die Eintiefung durch spanlose Umformung, vorzugsweise mittels Stanzen und/oder Pressen und/ oder Schlagen, erzeugt wird. Beispielsweise können für diese Umformung Stanzstempel eingesetzt werden, wobei mit einem ersten Stempel zunächst eine Eintiefung mit zylindrischen Umfang erzeugt wird und dann mit einem zweiten Stempel der obere Teil der Eintiefung durch gezielte Materialverdrängung radial nach innen in seinen Durchmesser verkleinert wird. Vorteilhaft kann mit einer solchen spanlosen Umformung eine hohe Fertigungsgeschwindigkeit erreicht werden, was für eine kostengünstige Massenproduktion wichtig ist.

Alternativ kann die Eintiefung auch durch spanabhebende Bearbeitung, vorzugsweis mittels Bohren und/oder Fräsen erzeugt werden. Ein hierfür geeignetes Werkzeug ist z.B. ein sich nach unten konisch verbreiternder Fräser, der zur Erzeugung der Eintiefung zunächst senkrecht in den Bremsbelagträger fährt und dann auf einer Kreisbahn parallel zur Flachseite des Bremsbelagträgers bewegt wird. Ein anderes geeignetes Werkzeug ist ein Fingerfräser, der schräg zur Flachseite des Bremsbelagträgers ausgerichtet und auf einer Kegelmantelbahn bewegt wird. Der Bearbeitungsaufwand ist bei spanabhebender Bearbeitung zwar größer, allerdings ist hier die Herstellung stärkerer Hinterschneidungen bei hoher Maßgenauigkeit möglich.

Um das Dämmblech mit möglichst geringem Aufwand mit dem Kragen versehen zu können, ist bevorzugt vorgesehen, daß der Kragen am Dämmblech mittels Durchstoßens und Aufbiegens erzeugt wird. Hierdurch wird gewährleistet, daß der Kragen einstückig mit dem übrigen Dämmblech erzeugt wird und daß kein zusätzliches Material für die Anbringung des Kragens erforderlich ist.

Wenn eine besonders wirksame Schalldämpfung am Bremsbelagträger gewünscht wird, kann zwischen die Bremsbelagträger und das Dämmblech vor deren Verstauchung miteinander eine Dämmstofflage eingelegt werden. Diese Dämmstofflage besteht bevorzugt aus einem nichtmetallischen, ausreichend hitzebeständigen Material, z.B. ein temperaturfester Kunststoff, mit schallschwingungsdämpfenden Eigenschaften.

Um sicher auszuschließen, daß sich das Dämmblech und der Bremsbelagträger im Betrieb relativ zueinander verdrehen, ist vorgesehen, daß zwei oder mehr Eintiefungen und Kragen im seitlichen Abstand voneinander deckungsgleich an dem Bremsbelagträger und dem Dämmblech erzeugt werden.

Das erfindungsgemäße Verfahren wird bevorzugt für den vorstehend beschriebenen Zweck eingesetzt; denkbar ist aber auch ein allgemeinerer Einsatz des Verfahrens für andere geeignete Werkstücke. Für diesen allgemeineren Einsatz des Verfahrens ist gemäß Anspruch 8 vorgesehen, daß es statt zur Herstellung eines Bremsbelagträgers zur Herstellung eines beliebigen, aus mindestens zwei Teilen zusammengefügten Werkstücks eingesetzt wird, wobei statt eines Bremsbelagträgers eine beliebige Metallplatte mit ausreichend großer Materialstärke und statt eines Dämmblechs ein beliebiges Blech mit ausreichend geringer Materialstärke eingesetzt wird.

Im folgenden wird das erfindungsgemäße Verfahren anhand einer Zeichnung mit einem Ausführungsbeispiel erläutert.

Die Figuren der Zeichnung zeigen:
- Figur 1: einen Bremsbelagträger während eines ersten Bearbeitungsschritts zur Herstellung einer Eintiefung, im Querschnitt,
- Figur 2: den Bremsbelagträger während eines zweiten Bearbeitungsschritts zur Erzeugung der Eintiefung, ebenfalls im Querschnitt,
- Figur 3: einen Bremsbelagträger und ein Dämmblech als vorgefertigte Einzelteile vor deren Verbindung miteinander, im Querschnitt,
- Figur 4: den Bremsbelagträger und das Dämmblech aus Figur 3 in lose zusammengestecktem Zustand, ebenfalls im Querschnitt, und
- Figur 5: das fertige Teil, bestehend aus dem Bremsbelagträger und dem damit verbundenen Dämmblech, ebenfalls im Querschnitt.

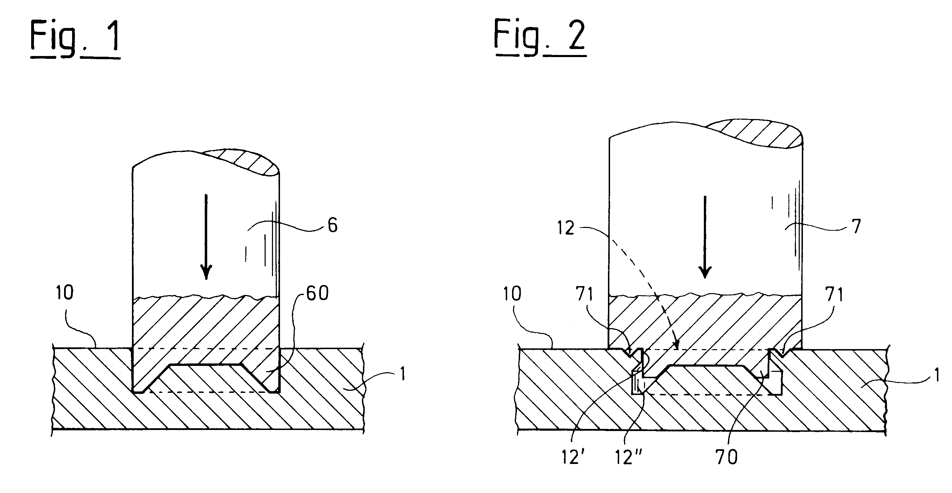

In den Figuren 1 und 2 der Zeichnung ist ein Beispiel für die spanlose Herstellung einer Eintiefung in einem plattenförmigen Bremsbelagträger 1 dargestellt.

Gemäß Figur 1 wird mit einem in Pfeilrichtung mit ausreichender Kraft zugeführten Stempel 6 eine Grund-Eintiefung in den Bremsbelagträger 1 von dessen Oberseite 10 her eingestanzt. Der Stempel 6 besitzt dazu ein kronenförmiges Stirnende 60, das am Außenumfang in Fortsetzung des übrigen Stempels 6 zylindrisch geformt ist und das radial nach innen hin eine Ausnehmung aufweist. Nach diesem ersten Stanzvorgang verbleibt nach Rückzug des Stempels 6 in dem Bremsbelagträger 1 eine Eintiefung, die in ihrer Form ein Negativ des vorderen Endes 60 des Stempels 6 darstellt.

In einem zweiten Bearbeitungsschritt wird mittels eines zweiten Stempels 7 die gewünschte endgültige Form der Eintiefung 12 erzeugt. Hierzu besitzt der Stempel 7 an seinem unteren Stirnende ebenfalls einen kronenförmigen Stirnbereich 70, wobei dessen Durchmesser aber kleiner ist als derjenige des Stirnbereichs 60 des ersten Stempels 6. Weiterhin ist der Durchmesser des Stempels 7 oberhalb seines Stirnbereichs 70 größer als der Durchmesser des ersten Stempels 6. Im Bereich des Übergangs von dem Stirnbereich 70 zum übrigen Stempel 7 ist demnach ein Durchmessersprung vorhanden. Auf dessen in der Radialebene liegender Stufenfläche ist ein umlaufender Vorsprung 71 mit dreieckförmigem Querschnitt vorgesehen. Wird der Stempel 7 in Pfeilrichtung in den Bremsbelagträger 1 hineinbewegt, übt der Vorsprung 71 eine Keilwirkung auf das die Eintiefung 12 umgebende Material des Bremsbelagträgers 1 aus, wodurch das radial innen von dem Vorsprung 71 befindliche Material nach innen bewegt wird und sich hier der Durchmesser der Eintiefung 12 auf ein durch den Außenumfang des Stirnbereichs 70 begrenztes Maß verkleinert. Hierdurch wird ein oberer Bereich 12' der Eintiefung 12 mit einem verminderten Durchmesser und einem rechtwinklig zur Oberseite 10 des Bremsbelagträgers 1 ausgerichteten Verlauf erzeugt. In ihrem unteren Bereich 12' wird die Eintiefung 12 bei diesem zweiten Stanzvorgang nicht mehr verändert. Als Gegenfläche für die Unterstützung der Rückseite des Bremsbelagträgers 1 während der vorstehend beschriebenen Umformung genügt hier eine ebene Auflage, die in der Zeichnung nicht dargestellt ist. Nach Rückzug des Stempels 7 aus dem Bremsbelagträger 1 liegt eine Eintiefung 12 vor, die in ihrem unteren Teil schräg nach außen verläuft und somit eine Hinterschneidung aufweist.

Alternativ zu dem anhand der Figuren 1 und 2 beschriebenen Bearbeitungsverfahren läßt sich die Eintiefung 12 in der gewünschten Form auch durch spanabhebende Bearbeitung, insbesondere durch Bohren und/oder Fräsen erzeugen.

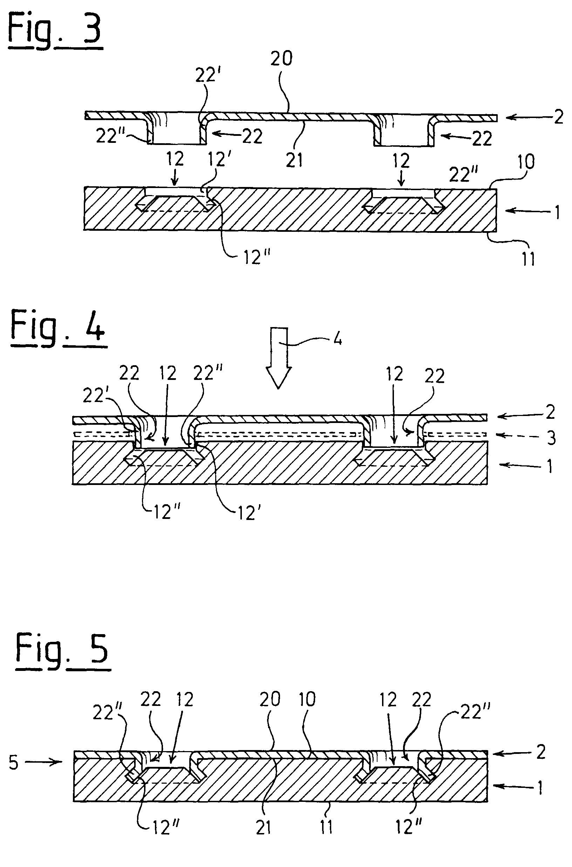

Figur 3 der Zeichnung zeigt unten einen Bremsbelagträger 1, der aus einem Zuschnitt aus einer flachen Metallplatte, üblicherweise Stahlplatte, spanlos mittels des vorstehend beschriebenen oder mittels eines spanabhebenden Bearbeitungsverfahrens hergestellt ist. Die Umrißform des Bremsbelagträgers entspricht der von bekannten Ausführungen.

Der Bremsbelagträger 1 weist bei dem dargestellten Ausführungsbeispiel an seiner Oberseite 10 zwei Eintiefungen 12 auf. Jede der Eintiefungen 12 besteht aus dem oberen Bereich 12' und dem unteren Bereich 12''. Der obere Bereich 12' ist im wesentlichen zylindrisch mit einem rechtwinklig zur Oberseite 10 gerichteten Verlauf ausgeführt, wobei die Tiefe relativ zum Durchmesser klein ist. Der untere Bereich 12'' der Eintiefung 12 geht vom unteren äußeren Teil des oberen Bereiches 12' aus und besitzt die Form einer schräg nach außen und unten weisenden, ringförmig umlaufenden Nut.

Die Unterseite 11 des Bremsbelagträgers 1 ist eben ausgeführt und dient zur Anbringung eines Bremsbelages durch übliche und bekannte Verbindungstechniken.

Oberhalb des Bremsbelagträgers 1 ist in Figur 3 ein Dämmblech 2 dargestellt, dessen Materialstärke im Vergleich zum Bremsbelagträger 1 wesentlich kleiner ist. Deckungsgleich mit den beiden Eintiefungen 12 ist das Dämmblech 2 mit zwei zu seiner Unterseite 21 hin vorstehenden Kragen 22 ausgeführt. Diese Kragen 22 werden bevorzugt mittels Durchstoßens und Aufbiegens erzeugt. Jeder Kragen 22 besitzt einen nahe der Unterseite 21 des Dämmbleches 2 liegenden hinteren Bereich 22' und einen am unteren Ende des Kragens 22 liegenden vorderen Bereich 22''. Der Außendurchmesser jedes Kragens 22 ist so bemessen, daß er geringfügig kleiner ist als der Innendurchmesser des oberen Bereiches 12' der Eintiefungen 12. Die Oberseite 20 des Dämmbleches 2 ist, mit Ausnahme der Durchbrechungen im Bereich der Kragen 22, glattflächig ausgebildet.

Figur 4 der Zeichnung zeigt den Bremsbelagträger 1 und das Dämmblech 2 nach einem losen Zusammenstecken, wobei der vordere Bereich 22' jedes Kragens 22 im oberen Bereich 12' der zugehörigen Eintiefung 12 zu liegen kommt.

Wie durch gestrichelte Linien angedeutet ist, kann vor dem losen Zusammenstecken von Bremsbelagträger 1 und Dämmblech 2 zwischen diese zusätzlich eine Dämmstofflage 3 aus einem schallschwingungsdämpfenden Material eingelegt werden, wenn eine besonders hohe Schalldämmung gewünscht wird.

Zur weiteren Verbindung zwischen dem Bremsbelagträger 1 und dem Dämmblech 2 wird im folgenden ein Stauchvorgang ausgeführt, wobei, z.B. mittels eines Stempels passender Form, eine Stauchkraft in Richtung des Pfeiles 4 auf das Dämmblech 2 ausgeübt wird und wobei der Bremsbelagträger 1 auf einer festen Unterlage positioniert ist.

Das Ergebnis dieses Stauchvorganges ist in Figur 5 dargestellt, wo nun das fertige Bauteil 5 vorliegt. Durch den Stauchvorgang ist das Dämmblech 2 mit seiner Unterseite 21 auf die Oberseite 10 des Bremsbelagträgers 1 gelangt. Der jeweils vordere Bereich 22'' der Kragen 22 ist durch den Stauchvorgang in den unteren Bereich 12'' der Eintiefungen 12 gepreßt. Hierbei weitet sich der vordere Bereich 22'' jedes Kragens 22 auf und wird zwangsweise der Form des unteren Bereiches 12'' der Eintiefung 12 angepaßt, bis er diesen unteren Bereich 12'' der Eintiefung 12 vollständig oder annähernd vollständig ausfüllt. Damit das Material des Dämmbleches 2 bei dem Stauchvorgang nicht im hinteren Bereich 22' des Kragens 22 nach innen ausweichen kann, wird hier zweckmäßig ein passend bemaßter erster Stempel vorab eingesetzt, zu dem sich ein Stauchwerkzeug, z.B. ein den ersten Stempel koaxial umgehender zweiter Stempel, relativ bewegen kann.

Wie Figur 5 zeigt, wird durch die vorstehend beschriebene Verfahrensweise eine sehr feste und dauerhafte Verbindung zwischen dem Bremsbelagträger 1 und dem Dämmblech 2 erreicht. Die Oberseite 20 des Dämmbleches 2 und damit auch des fertigen Bauteils 5 ist frei von vorstehenden Erhöhungen, was für den Einbau der fertigen Bremsbacke mit einem hier nicht dargestellten, an der Unterseite 11 des Bremsbelagträgers angebrachten Bremsbelag in eine Bremse vorteilhaft ist.

Die in Figur 4 angedeutete Dämmstofflage 3 ist in Figur 5 nicht eingezeichnet; aus Figur 5 ist aber leicht ersichtlich, daß eine solche Dämmstofflage 3 sicher zwischen dem Bremsbelagträger 1 und dem Dämmblech 2 eingeklemmt und gehaltert werden kann.

Die vorstehenden Angaben "oben" und "unten" beziehen sich selbstverständlich nur auf die für die Zeichnung gewählte Ausrichtung von Bremsbelagträger 1 und Dämmblech 2; in der Praxis spielt es keine Rolle, wie die Teile während der Verbindung miteinander und während ihres Einsatzes räumlich orientiert sind.

## Patentansprüche

1. Verfahren zur Herstellung eines Bremsbelagträgers (1), wobei mit dessen einer, einem zu tragenden Bremsbelag abgewandter Flachseite (10) ein Dämmblech (2) zur Vermeidung oder Verminderung von Bremsgeräuschen verbunden wird,
**dadurch gekennzeichnet,**
- daß in die genannte Flachseite (10) des Bremsbelagträgers (1) mindestens eine kreis- oder kreisringförmige Eintiefung (12), die sich zumindest in ihrem unteren Teil schräg nach unten und außen erstreckt, eingebracht wird,
- daß an dem Dämmblech (2) mindestens ein vorragender hohlzylindrischer Kragen (22), dessen Kontur in das obere Ende der Eintiefung (12) paßt, angebracht oder angeformt wird,
- daß das Dämmblech (2) mit seinem Kragen (22) auf die Eintiefung (12) des Bremsbelagträgers (1) aufgelegt wird und
- daß das Dämmblech (2) durch einen Stauchvorgang mit dem Bremsbelagträger (1) verbunden wird, indem der Kragen (22) unter Aufweitung zumindest seines vorderen Bereiches (22'') in die Eintiefung (12) eingepreßt wird.

2. Verfahren nach Anspruch 1, dadurch gekennzeichnet, daß die Eintiefung (12) mit einem oberen, senkrecht zur Flachseite (10) nach unten verlaufenden Bereich (12') ausgeführt wird.

3. Verfahren nach Anspruch 1 oder 2, dadurch gekennzeichnet, daß die Eintiefung (12) durch spanlose Umformung, vorzugsweise mittels Stanzen und/oder Pressen und/oder Schlagen, erzeugt wird.

4. Verfahren nach Anspruch 1 oder 2, dadurch gekennzeichnet, daß die Eintiefung (12) durch spanabhebende Bearbeitung, vorzugsweise mittels Bohren und/oder Fräsen, erzeugt wird.

5. Verfahren nach einem der vorangehenden Ansprüche, dadurch gekennzeichnet, daß der Kragen (22) am Dämmblech (2) mittels Durchstoßens und Aufbiegens erzeugt wird.

6. Verfahren nach einem der vorangehenden Ansprüche, dadurch gekennzeichnet, daß zwischen den Bremsbelagträger (1) und das Dämmblech (2) vor deren Verstauchung miteinander eine Dämmstofflage (3) eingelegt wird.

7. Verfahren nach einem der vorangehenden Ansprüche, dadurch gekennzeichnet, daß zwei oder mehr Eintiefungen (12) und Kragen (22) im seitlichen Abstand voneinander deckungsgleich an dem Bremsbelagträger (1) und dem Dämmblech (2) erzeugt werden.

8. Verfahren nach einem der vorangehenden Ansprüche, dadurch gekennzeichnet, daß es statt zur Herstellung eines Bremsbelagträgers zur Herstellung eines beliebigen, aus mindestens zwei Teilen zusammengefügten Werkstücks eingesetzt wird, wobei statt eines Bremsbelagträgers eine beliebige Metallplatte mit ausreichend großer Materialstärke und statt eines Dämmblechs ein beliebiges Blech mit ausreichend geringer Materialstärke eingesetzt wird.
